(19) Europäisches Patentamt
European Patent Office
Office européen des brevets

(11) **EP 3 278 398 B1**

(12) **EUROPEAN PATENT SPECIFICATION**

(45) Date of publication and mention
of the grant of the patent:
**23.09.2020 Bulletin 2020/39**

(21) Application number: **16782471.3**

(22) Date of filing: **14.02.2016**

(51) Int Cl.:
*H01Q 3/34* (2006.01)    *H01Q 3/40* (2006.01)
*H01Q 21/00* (2006.01)    *H01Q 21/29* (2006.01)
*H04B 7/06* (2006.01)

(86) International application number:
**PCT/CN2016/073762**

(87) International publication number:
**WO 2016/169323 (27.10.2016 Gazette 2016/43)**

(54) **SPARSE PHASE-MODE PLANAR FEED FOR CIRCULAR ARRAYS**

PLANARE ZUFÜHRUNG IM SPARSE-PHASE-MODUS FÜR KREISFÖRMIGE ARRAYS

ALIMENTATION PLANE EN MODE DE PHASE ÉPARSE POUR DES RÉSEAUX CIRCULAIRES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **21.04.2015 US 201514692520**

(43) Date of publication of application:
**07.02.2018 Bulletin 2018/06**

(73) Proprietor: HUAWEI TECHNOLOGIES CO., LTD.
**Guangdong 518129 (CN)**

(72) Inventor: **KLEMES, Marek
Kanata, Ontario K2L 2V5 (CA)**

(74) Representative: **Maiwald Patent- und
Rechtsanwaltsgesellschaft mbH
Elisenhof
Elisenstraße 3
80335 München (DE)**

(56) References cited:
**EP-A2- 0 313 057        WO-A2-2015/040500
US-A- 3 090 956        US-A- 3 827 055
US-A- 4 176 322        US-A- 5 028 930
US-A1- 2004 257 292        US-A1- 2005 259 019
US-A1- 2013 234 890        US-A1- 2014 266 901**

**Description**

TECHNICAL FIELD

The present invention relates to antennas and electromagnetic radiation modification, and, in particular embodiments, to systems and methods for steering the direction of the main lobe of a radiation pattern effected by antennas.

BACKGROUND

Beam-steering is the angular positioning of the main lobe of a radiation pattern. This allows for greater discrimination in favor of a desired signal from a point-like source in the far field of the antenna, for sensing or information transmission and reception. When it is required to steer the beam of a planar array antenna over a limited range in 2 dimensions around the array axis (which is perpendicular to the plane of the array), it becomes difficult to fit each element with a variable phase shifter or transceiver module (TR), and incorporate them all into the feed structure as would be devised in the conventional approach. This is especially true where the wavelengths involved are small, because the array elements and spacings scale with wavelength (must be in the order of half wavelength) whereas feed lines and phase shifters take up additional room and do not completely scale with wavelength, especially TRs. In any case, the phaseshifters and TRs become very expensive for short wavelengths, e.g. millimeter-waves, so it is desirable to use as few of them as possible to achieve the necessary beam control. The following references are related to subject matter of the present application.

[1] R. J. Mailloux: Phased Array Antenna Handbook, Second Edition, Artech House, Boston, © 2005;

[2] F. Mohamadi: "Wafer-scale integration brings low cost and a small footprint to active antenna arrays", RF Design, February 2005;

[3] L. Rade, B. Westergren: Beta p Mathematics Handbook, Second Edition, CRC Press, Boca Raton, 1992;

[4] Rahim, T. and Davies, D.E.N., "Effect of directional elements on the directional response of circular antenna arrays", IEE Proceedings, Part H, Vol. 129, No. 1, February 1982.

[5] Davis, J. G. and Gibson, A. A.: "Phase Mode Excitation in Beamforming Arrays", pp. 307-310, Proceedings of the 3rd European Radar Conference, Manchester, UK, September 2006.

[6] Karavassilis, N., Davies, D. E. N., and Guy, C. G.: "Experimental HF circular array with direction finding and null steering capabilities", IEE Proceedings, Part H, Vol. 133, No. 2, April 1986.

[7] A. Akiyama, J. Hirokawa, M. Ando, E. Takcda and Y. Arai: "Characteristics of 60GHz Band Conical Beam Radial Line Slot Antennas", IEEE International Symposium on Antennas and Propagation, pp. 2122-2125, 1999.

[8] A. Sibillc, C. Roblin, G. Poncelet, "Beam steering circular monopole arrays for wireless applications", IEE Antennas and Propagation, International Conference on, Vol. 1, 14-17 Apr. 1997 Page(s):358 - 361.

[9] M. B. Shcmirani and F. Aryanfar: "Analog implementation of high resolution DFT in RF domain, utilizing a special multilayer realization of Rotman lens", IEEE, 2008.

US 3 827 055 A discloses a circular phased array system for steering an azimuthal direction of an antenna beam through 360 degrees by using a lens feed. The lens feed consists of a circular parallel-plate radial transmission line with a central set of probes and a ring of peripheral probes. The central set of probes can be energized and phased to produce electromagnetic energy with an amplitude distribution within the parallel-plate line in any given direction.
US 2005/259 019 A1 discloses a radial constrained lens including a feed array that excites a continuous radiating aperture through a section of radial waveguide. Feed elements of the feed array are coupled to a feed network. The radial constrained lens may be commutated about a full 360 degree aperture view.
US 5 028 930 A discloses a coupling matrix for a circular array microwave antenna. Beam forming and steering means feed a radio frequency signal to a matrix of passive couplers that are configured in rows.
EP 0 313 057 A2 discloses a dual mode phased array antenna system that is able to emit two orthogonal beams with a substantially similar far-field intensity distribution.
US 3 090 956 A discloses a steerable antenna that can be electronically controlled to emit one or more beams in predetermined azimuthal directions.

US 4,176,322 A discloses a radio frequency lens to combine portions of a beam received by spaced-apart antennas in a coherent manner.

US 2014/266 901 A1 discloses a system and apparatus for beam-steering of an axially propagating beam by means of a Butler matrix.

SUMMARY OF THE INVENTION

The invention is defined by the appended claims. Embodiments and examples not covered by the claims are presented to illustrate, and facilitate the understanding of, the claimed invention.

In a first aspect, an apparatus for radiation beam-steering is provided, as defined in claim 1. Further achievements have been attained by the subject-matters respectively defined in the dependent claims.

In a second aspect not presently claimed, an apparatus for coupling beam-steering circuitry to an array of antenna elements includes an electrically conducting hollow cylinder comprising a first planar surface, a second planar surface, and a cylindrical wall connecting the first planar surface to the second planar surface, the first planar surface, the second planar surface, and the cylindrical wall defining a cylindrical cavity; a plurality of coaxial transducer pick-up probes, wherein an outer portion of the transducer pick-up probes are electrically coupled to the first planar surface, wherein an inner portion of the transducer pick-up probes protrude into the cylindrical cavity without touching the second planar surface, and wherein the transducer pick-up probes are substantially symmetrically arranged on a portion of the first planar surface proximate to the cylindrical wall; and a plurality of coaxial phase-mode feed probes, wherein outer portion of the phase-mode feed probes are electrically coupled to the second planar surface, wherein an inner portion of the phase-mode feed probes protrudes into the cylindrical cavity without touching the first planar surface, and wherein the phase-mode feed probes are substantially symmetrically arranged around the center of a circle defined by one end of the cylindrical cavity in the second planar surface, wherein the number of phase-mode feed probes is less than the number of transducer pick-up probes.

In a third aspect, a wireless device for radiation beam-steering as defined in claim 7.

BRIEF DESCRIPTION OF THE DRAWINGS

For a more complete understanding of the present invention, and the advantages thereof, reference is now made to the following descriptions taken in conjunction with the accompanying drawings which illustrate, but do not limit the scope of the present invention to, a specific embodiment in which:

Fig. 1 is a graph illustrating a far-field pattern of the Oth order phase-mode $P_0$ of a 16 element, $\lambda/2$ spaced circular ring array;

Fig. 2 is a graph illustrating a far-field pattern of the -1st order phase-mode $P_{-1}$ of a 16-element, $\lambda/2$ spaced circular ring array;

Fig. 3 illustrates one example of a beam-steerer system;

Fig. 4 illustrates a plot of an example of the resultant steered-beam far-field radiation pattern at the main (M) output C from the beam-steerer system of Fig. 3;

Fig. 5 illustrates a plot of an example of the resultant steered-beam far-field radiation pattern using both first-order phase-modes $P_1$ and $P_{-1}$ that are available at two of the ports of the disclosed feed and connected to corresponding input ports of the beam-steerer system of Fig. 6;

Fig. 6 illustrates an embodiment of an example beam-steering system for steering a beam in a manner such as illustrated, for example, in Fig. 5;

Fig. 7A is a conceptual illustration of an embodiment of the disclosed sparse phase-mode planar feed for circular arrays;

Fig. 7B is a graph illustrating a half of the circularly-symmetrical far-field pattern of 1st order phase-mode $P_{-1}$ and 1st order phase-mode $P_1$ of a 16-element, $\lambda/2$ spaced circular ring array;

Fig. 7C is a graph illustrating a half of the circularly-symmetrical far-field pattern of Oth order phase mode $P_0$ of a

16 element, $\lambda/2$ spaced circular ring array;

Fig. 8 illustrates an embodiment of the disclosed sparse phase-mode planar feed for circular arrays;

Fig. 9A is a perspective view of the transition assembly;

Fig. 9B is a cut-away perspective view of the transition assembly;

Fig. 10 is a cross-section view of the sparse phase-mode planar feed of Fig. 9A;

Fig. 11 is a bottom view of the sparse phase-mode planar feed of Fig. 9A;

Fig. 12 is a top view of the sparse phase-mode planar feed of Fig. 9A;

Fig. 13 is a side view of the sparse phase-mode planar feed of Fig. 9A; and

Fig. 14 is a block diagram of a processing system that may be used for implementing the devices and methods disclosed herein.

DETAILED DESCRIPTION OF ILLUSTRATIVE EMBODIMENTS

The making and using of the presently preferred embodiments are discussed in detail below. It should be appreciated, however, that the present invention provides many applicable inventive concepts that can be embodied in a wide variety of specific contexts. The specific embodiments discussed are merely illustrative of specific ways to make and use the invention, and do not limit the scope of the invention.

Disclosed herein is a convenient, substantially planar structure and circuit forming the electromagnetic interface for coupling a substantially circular array of antennas to an advantageous beam-steerer and the beam-steerer's associated control algorithm, as described in pending US Patent Application Serial Number 13/870,309 filed April 25, 2013 and entitled "Simple 2D Phase-Mode Enabled Beam-Steering Means" and in U.S. Patent Application Serial Number 14/295,235 filed June 3, 2014 and entitled "System and Method for Simple 2D Phase-Mode Enabled Beam-Steering,".

Disclosed herein is a sparse phase-mode feed to feed an arbitrary number of elements, N, of an antenna array (e.g., a circular antenna array) without the necessity of a full N-port network. In an embodiment, only three phase-mode ports are used to feed any number, N, of elements of an antenna array. One advantage of embodiments of the disclosed systems and methods is reduction of feed losses and that the feed and antenna array are integrated in a planar structure. In an embodiment, the antenna array radiates in an axial direction, i.e. orthogonal to the plane of the structure.

Other solutions for feeding a phase-mode feed network of arbitrary number N of elements use a full NxN Butler matrix or some version of a Rotman Lens. However, it is desirable to have a method that is less lossy and/or less complex to manufacture accurately, especially at millimeter (mm)-wave frequencies. Furthermore, it is desirable to use antenna structures which radiate in an axial direction, rather than in an azimuthal direction.

In an embodiment, three phase-mode ports feed an arbitrary number of N antenna elements of a circular array for the lowest-order phase-modes (i.e., -1, 0, and +1). Embodiments of the disclosed systems and methods are implemented using a simple planar construction. The number, N, of antenna elements is not restricted to a power of 2 as in the order-N Butler Matrix. In an embodiment, only one 4x4 Butler Matrix (four hybrid splitter/combiner components) are used to support the three phase-mode feed ports. In contrast to larger order-N Butler Matrices, embodiments of the disclosure do not require any phaseshifters to support the three phase-mode feed ports. Disclosed embodiments allow a circular array of elements or sub-arrays to be co-integrated. The number of hybrid splitter/combiner components is independent of the number, N, of antenna elements. An embodiment allows beam-steering circuits to be co-integrated.

In an embodiment, the disclosed sparse phase-mode planar feed operates with a planar uniform circular array of radiating or receiving transducer elements. More than one coaxial ring of array elements may be used, e.g., as sub-arrays. A central radially-symmetrical structure may be added to reduce coupling across the array. The direction of radiation is perpendicular to the plane of the array. In case of electromagnetic elements (antennas), their polarizations can be linear or circular, but, in an embodiment, should all be identical, with consideration given to the phases of their excitations such that the 0-order phase mode combiner will correspond to no phase progression of excitations around the circle, the +1 order phase mode to an excitation-phase progression from 0 to $2\pi$ radians in one direction around the circle, and the -1 order phase mode to an excitation-phase progression from 0 to $2\pi$ radians in the opposite direction around the same circle.

In an embodiment, each phase mode is available at a separate output of the feed network. The lowest order phase modes (i.e., 0, 1, -1, 2) are effected by a 4x4 Butler Matrix. Their order may be shifted if the element polarization axes are arranged to be radially symmetric, as opposed to uniformly-directed, in which case the order 2 phase-mode port may be terminated.

In an embodiment, the disclosed feed network provides a circular transition region from azimuthal to axial Transverse Electromagnetic (TEM) propagation. The feed network includes substantially parallel conductive circular disks separated by about ¼ wavelength (but preferably not more than about ½ wavelength) of dielectric. The diameter of the circular disks is dependent on the number, N, of circular-array elements so that their N pick-up probes are about ½ wavelength apart and ¼ wavelength from a circumferential vertical conductive wall joining the top and bottom circular disks. The feed network includes four inner coaxial probes symmetrically spaced around the center of the circular disks, for example in a square with a diagonal of about $1/\pi$ wavelengths, or evenly spaced around a circle, about ¼ wavelength of arc apart. The four central feed probes have their outer conductors connected to the bottom disk and their inner conductors protruding about 1/8 wavelength into the space between the disks, but not touching the top disk. The N outer transducer pick-up probes have their outer conductors connected to the top disk and their inner conductors protruding about 1/8 wavelength into the space between the disks, but not touching the bottom disk. The other ends of the four central feed probe inner conductors are connected to the element ports of a planar 4x4 Butler Matrix via impedance-matching as may be required to match its characteristic impedance. The other ends of the N transducer pick-up probe inner conductors are connected to the transducer elements or sub-arrays via matched-impedance element-feed planar networks.

Some embodiments of this disclosure are commercially desirable in products such as small-cell backhaul and other mm-wave point-to-point radios since the embodiments facilitate an auto-alignment and tracking feature for the antenna by requiring very few expensive mm-wave parts. Auto-alignment, in turn, greatly reduces installation times and costs of such links, especially on less-rigid, street-level platforms. Fabrication is simplified by the simple circular planar structure of some embodiments.

The all-planar construction of embodiments of this disclosure facilitates integration with axially-radiating circular antenna arrays and 2-axis phase-mode-enabled steering subsystems. The all-planar construction may facilitate coaxial stacking in a multiple-band design. Furthermore, these embodiments avoid having coaxial-to-planar transitions, many cross-overs, and meander lines that are required for NxN matrix-type feeds and generally increase their losses.

Embodiments of this disclosure allow for low-sidelobe axial (steered) beam with circular, elliptical, linear, or arbitrary polarization. Embodiments of the disclosed sparse phase-mode planar feed have an order of N/3 advantage over other solutions using a full NxN feed network. The disclosed sparse phase-mode planar feed leaves room for hybrids, phase shifter, and control circuits for a steering network and provides lower losses than an NxN Butler Matrix (even if pruned for Nx3). Embodiments of the disclosure provide orthogonality and circular symmetry. In contrast, a Rotman Lens has aberrations and no circular symmetry. Similarly, an order-N Butler Matrix has orthogonality, but no symmetry to feed a circular array. Furthermore, both a Rotman Lens and an order-N Butler Matrix need N matched meander lines to feed N elements. However, embodiments if this disclosure do not require N meander lines in principle.

In an embodiment, a sparse phase-mode feed for an array of antenna elements includes an electrically conducting first disk; an electrically conducting second disk substantially parallel to and coaxial with the first disk; an electrically conducting outer wall physically and electrically coupling outside edges of the first disk to outside edges of the second disk and defining a space between the first disk, the second disk, and the outer wall; a plurality of phase-mode feed probes, wherein at least a portion of the phase-mode feed probes are electrically coupled to the first disk, and wherein the phase-mode feed probes are substantially symmetrically arranged around the center of the first disk in a central region of the first disk proximate to the center of the first disk; and a plurality of antenna-element probes, wherein at least a portion of the antenna-element probes are electrically coupled to the second disk, and wherein the antenna-element pick-up probes are substantially symmetrically arranged on an outer portion of the second disk proximate to the outer edge of the second disk, wherein the number of phase-mode feed probes is less than the number of antenna element probes. The phase-mode feed probes are sequentially coupled to four antenna-side ports of a 4x4 Butler Matrix via equal-length transmission lines, and wherein each of the transducer pick-up probes are coupled to a respective one of a greater number of radiating elements in an array of antenna elements. The array includes one of a substantially circular array, a substantially square array, and a polygonal array. The array may include a main array or a plurality of sub-arrays. The space may be one of a vacuum or a dielectric. The phase-mode feed probes and the transducer pick-up probes may be coaxial transmission lines or TEM waveguides. In an embodiment, one of a plurality of input/output (I/O) ports of a 4x4 Butler Matrix is terminated and at least one of the I/O ports is connected to beam-steering circuitry. Each of the Butler matrix input/output (I/O) ports corresponds to one of a plurality of sparse phase-mode feed I/O ports, wherein each of the sparse phase-mode feed I/O ports corresponds to a respective one of a 0th phase mode, a 1st phase mode a -1st phase mode and 2nd phase mode.

In an embodiment, an apparatus for coupling beam-steering circuitry to an array of antenna elements includes an electrically conducting hollow cylinder comprising a first circular planar surface, a second circular planar surface, and a cylindrical wall connecting the first circular planar surface to the second circular planar surface, wherein the first circular planar surface, the second circular planar surface, and the cylindrical wall define a space therein; a plurality of coaxial transducer pick-up probes, wherein an outer portion of the transducer pick-up probes are electrically coupled to the first circular planar surface, wherein an inner portion of the transducer pick-up probes protrude into the space without touching the second circular planar surface, and wherein the transducer pick-up probes are substantially symmetrically arranged on an outer portion of the first circular planar surface proximate to the outer edge of the first circular planar surface; and a plurality of coaxial phase-mode feed probes, wherein outer portion of the phase-mode feed probes are electrically coupled to the second circular planar surface, wherein an inner portion of the phase-mode feed probes protrudes into the space without touching the first circular planar surface, and wherein the phase-mode feed probes are substantially symmetrically arranged around the center of the second circular planar surface in a central region of the second circular planar surface proximate to the center of the second circular planar surface, wherein the number of phase-mode feed probes is less than the number of transducer pick-up probes. In an embodiment, there are four phase-mode feed probes. The coaxial phase-mode feed probes are sequentially coupled to four antenna-side ports of a 4x4 Butler Matrix. The Butler Matrix may include one quadrature hybrid and three sum-difference hybrids. Each of the 4x4 Butler Matrix I/O ports may include a corresponding one of the sparse phase-mode feed I/O ports, wherein each of the sparse phase-mode feed I/O ports corresponds to a respective one of a 0th phase mode, a 1st phase mode a -1st phase mode and 2nd phase mode. The feed may also include transducer element array connections coupled to the coaxial transducer pick-up probes, wherein the connections are arranged so as to maintain the same polarizations relative to axes fixed to the plane of the array. The apparatus may include an array of transducer elements coupled to the coaxial transducer pick-up probes. The array may include a plurality of sub-arrays, wherein the sub-array possesses a figure-eight azimuthal radiation pattern whose lobes are tangential to the circle of the sub-arrays, and wherein the axes of the sub-arrays are arranged radially with respect to a circle or to a polygon comprised by the array. The array may be one of a substantially circular array, a substantially square array, and a polygonal array.

In an embodiment, a wireless device for radiation beam-steering includes a processor; a transmitter/receiver coupled to the processor, wherein the transmitter/receiver is configured to transmit signals and receive signals according to instructions from the processor; and an antenna array, coupled to the transmitter/receiver, wherein the transmitter/receiver comprises beam-steering circuitry and a sparse phase-mode feed coupling the beam-steering circuitry to the antenna array, wherein the sparse phase-mode feed comprises: an electrically conducting first disk; an electrically conducting second disk substantially parallel to and coaxial with the first disk; an electrically conducting outer wall physically and electrically coupling outside edges of the first disk to outside edges of the second disk and defining a space between the first disk, the second disk, and the outer wall; a plurality of phase-mode feed probes, wherein at least a portion of the phase-mode feed probes are electrically coupled to the first disk, and wherein the phase-mode feed probes are substantially symmetrically arranged around the center of the first disk in a central region of the first disk proximate to the center of the first disk; and a plurality of transducer pick-up probes, wherein at least a portion of the transducer pick-up probes are electrically coupled to the second disk, and wherein the transducer pick-up probes are substantially symmetrically arranged on an outer portion of the second disk proximate to the outer edge of the second disk, wherein the number of phase-mode feed probes is less than the number of antenna element probes. The phase-mode feed probes are sequentially coupled to four antenna-side ports of a 4x4 Butler Matrix, wherein the 4x4 Butler Matrix comprises four input/output (I/O) ports, wherein the four I/O ports of the Butler Matrix are coupled to beam-steering circuitry, and wherein each of the transducer pick-up probes is coupled to a respective one of a radiating elements in an array of antenna elements. . The array is one of a substantially circular array, a substantially square array, and a polygonal array. The array may include a main array comprising a plurality of sub-arrays. In an embodiment, one of the four I/O ports of the Butler Matrix is terminated. Each of the Butler Matrix I/O ports includes a corresponding one of the sparse phase-mode feed I/O ports, wherein each of the sparse phase-mode feed I/O ports corresponds to a respective one of a 0th phase mode, a 1st phase mode a -1st phase mode and 2nd phase mode. The space may be a vacuum or a dielectric. The phase-mode feed probes and the transducer pick-up probes may be coaxial transmission lines or TEM waveguides.

The disclosed sparse phase-mode planar feed and beam-steerers for antenna arrays are herein described in greater detail of their principles of operation, in the context of a steerable millimeter-wave array antenna. Specifically, in an embodiment, the antenna includes a planar ring of identical radiating (or receiving) elements connected to a phase-mode beamforming network and radiating nominally in the direction orthogonal to the plane of the array (along the array axis).

In the case of an electromagnetic antenna, the array elements may be of linear or circular polarizations. In the case of circular polarizations, they may be arranged with their polarization axes and feedpoints symmetrically around the center, so that the physical angle of the polarization will also progress linearly around the circumference by one cycle, resulting in one of the 1st order phase modes. In an embodiment, phasing arrangements compensating for this phase-progression will form the 0th order phase mode. Other phase-mode feed arrangements for linearly-polarized elements may be devised, such as portions of a Butler matrix or Rotman lens, spatial or guided-mode feeds and other arrangements employed by those skilled in the art. In an embodiment, the end result is a phase-mode feed structure of a circular or polygonal ring array having output ports corresponding to the 0th, +1st and -1st order phase modes.

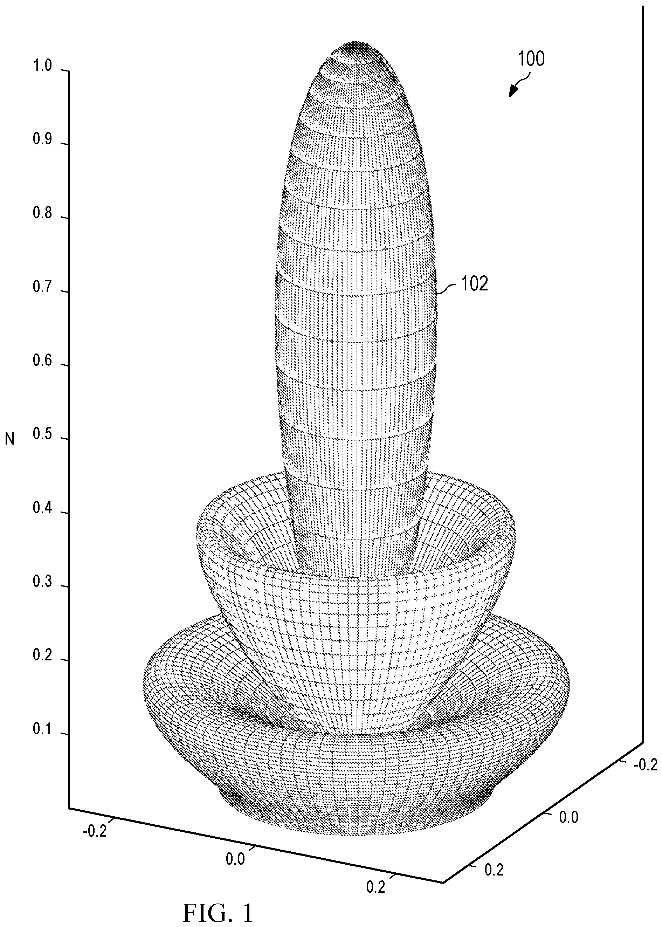

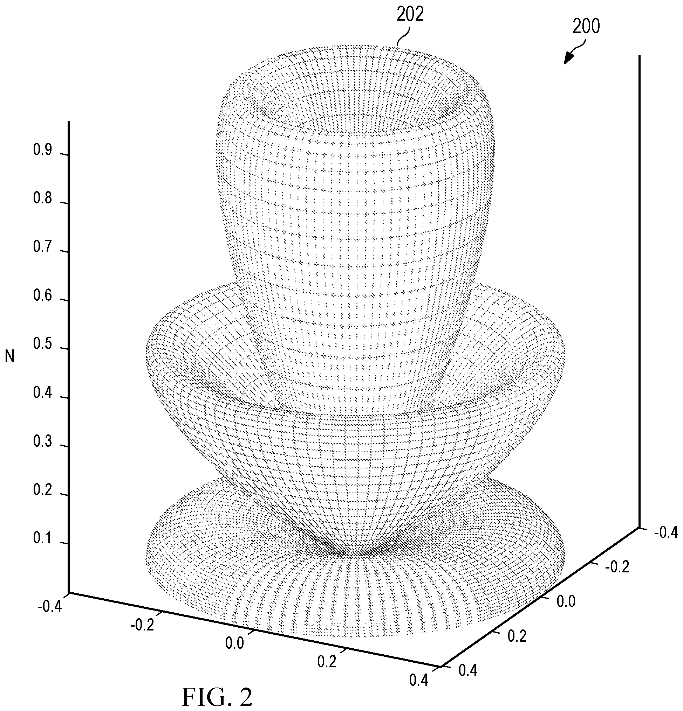

To help with the understanding of the operation of the disclosed sparse phase-mode planar feed for circular arrays, the far-field radiation patterns of the pertinent phase modes are illustrated in Figs. 1-2. Fig. 1 is a graph 100 illustrating a far-field pattern of Oth order phase mode $P_0$ of a 16 element, $\lambda/2$ spaced circular ring array. Fig. 2 is a graph 200 illustrating a far-field pattern of -1st order phase-mode $P_{-1}$ of a 16-element, $\lambda/2$ spaced circular ring array The far-field pattern of 1st order phase-mode $P_1$ of a 16 element, $\lambda/2$ spaced circular ring array is the same shape as graph 200, but with its phase progression (not shown) in the opposite direction around the symmetry axis.

In the disclosed embodiment, all antenna elements are shown to be omnidirectional and identically linearly polarized. However, it will be understood that other arrangements are possible, such as radially symmetric antenna elements with polarizations that are identically oriented with respect to the x, y, and z axes. In the Oth order phase mode, Po, there is no phase progression in the element excitations around the circular ring array (all elements are fed in phase), so there is no phase-progression in the circumferential direction around the array (z) axis. Thus all the fields add in-phase on the array axis and form the main beam in the far field. A normalized plot of the far field is shown in Fig. 1 for a 16-element ring array with elements spaced half-wavelength apart around the circumference. Fig. 2 shows a similar plot for the one of the other phase modes of the same ring array.

The main lobe 102 in the far-field radiation pattern for phase mode $P_0$ has a constant phase. The far-field radiation pattern for the $P_1$ phase-mode has a varying phase in the main lobe 202 ranging from $-\pi$ to $+\pi$ radians. The far-field radiation pattern for the $P_{-1}$ phase mode has also has a varying phase in its main lobe $+\pi$ radians out of phase with the $P_1$ phase mode. The phase progressions in the $P_1$ and $P_{-1}$ modes' far-field patterns are one complete cycle of $2\pi$ radians but in opposite directions around the z-axis, which is the same as their element excitation phase progressions.

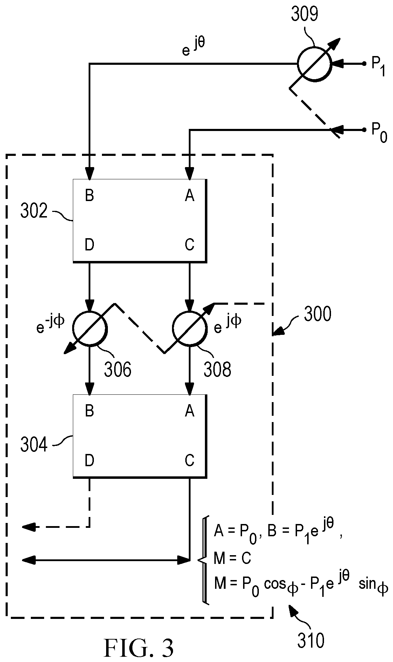

Fig. 3 illustrates a portion of an example beam-steerer system 300 with a variable-ratio combiner controlled by setting phaseshift $\varphi$, with phaseshift $\theta$ applied to input B. The portion of system 300 shown in Fig. 3 is a variable-ratio combiner. The system 300 includes two hybrid splitters/combiners 302, 304 and two oppositely adjusted phaseshifters 306, 308. Each hybrid splitter/combiner 302, 304 has two inputs, A and B, and two outputs, C and D. The input A for the hybrid splitter/combiner 302 is the $P_0$ phase-mode from the far-field of an array of antennas (not shown). The input B for the hybrid splitter/combiner 302 is the $P_1$ phase-mode from the far-field of an array of antennas, and is phase shifted by phaseshifter 309. The output C of hybrid splitter/combiner 302 is the input for phase shifter 308, and the output D of hybrid splitter/combiner 302 is the input for phase shifter 306. The output from phase shifter 306 is the input B for the hybrid splitter/combiner 304 and the output from phase shifter 308 is the input A for the hybrid splitter/combiner 304. The output C from the hybrid splitter/combiner 304 is the main (M) output where the steered main beam is effected. The output D from the hybrid splitter/combiner 304 is the auxiliary output. A more detailed description of beam-steerer system 300 and variations thereof are provided in US Patent Application Serial Number 14/295,235.

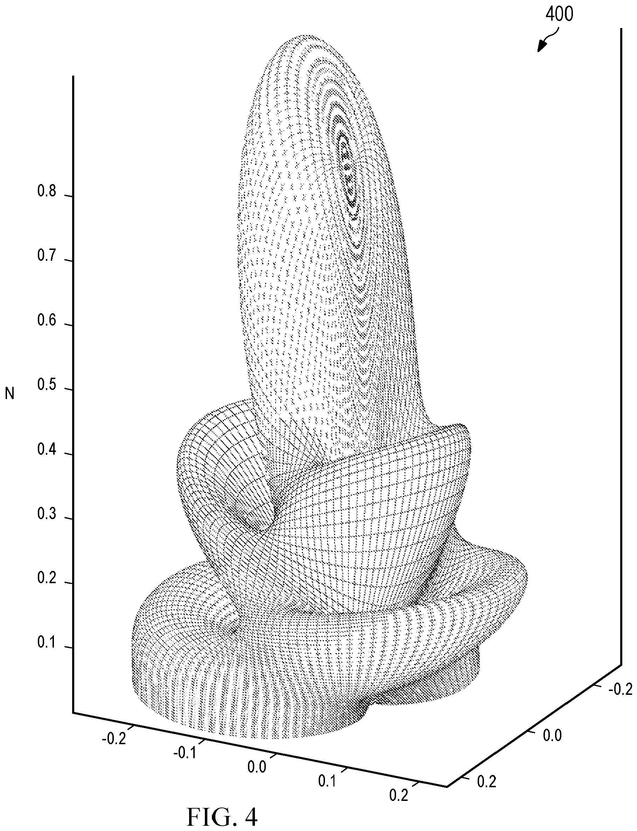

Fig. 4 illustrates a plot of an example of the resultant steered-beam far-field radiation pattern 400 effectively seen at the main (M) output C from the beam-steerer system of Fig. 4;

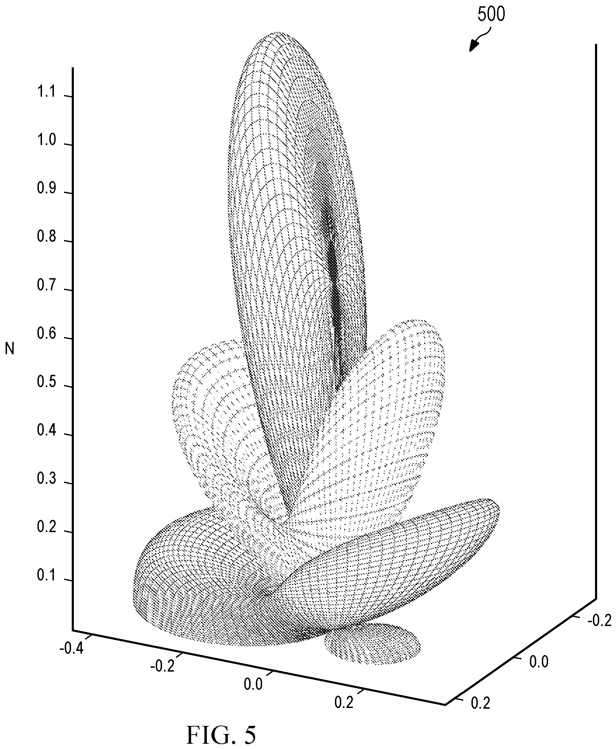

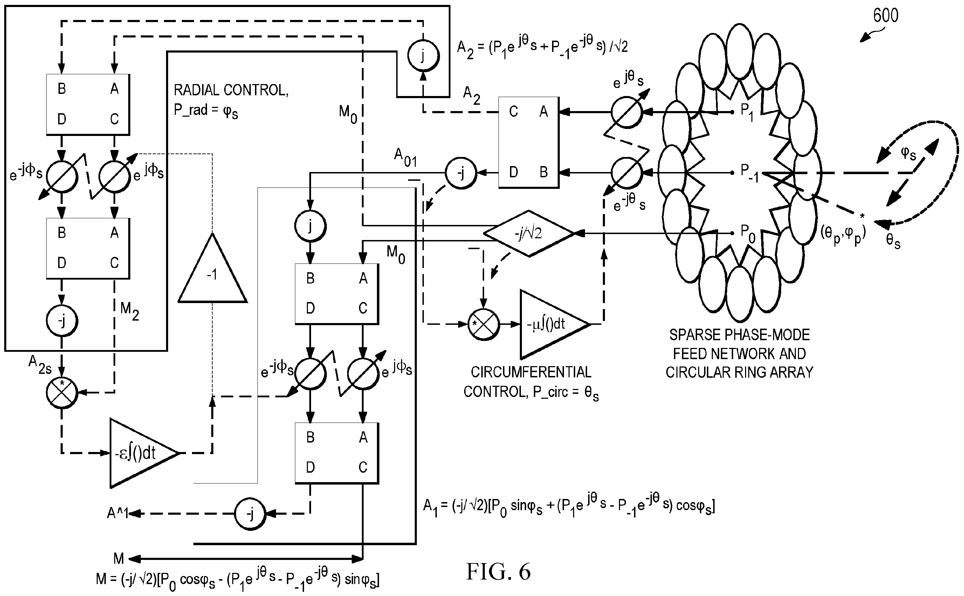

Fig. 5 illustrates a plot of an example of the resultant steered-beam far-field radiation pattern 500 using both first-order phase-modes $P_1$ and $P_{-1}$ that are available at two of the ports, A1 and M, in system 600 depicted in Fig. 6), and connected to corresponding input ports of another, more general example of a beam-steerer system such as those described in US Patent Application Serial Number 13/870,309 and in U.S. Patent Application Serial Number 14/295,235.

Figure 6 illustrates an example embodiment beam-steering system 700 that could be used to produce the field illustrated in Fig. 5. Detailed descriptions of beam-steering system 600 and variations thereof are provided in US Patent Application Serial Number 13/870,309 and in U.S. Patent Application Serial Number 14/295,235.

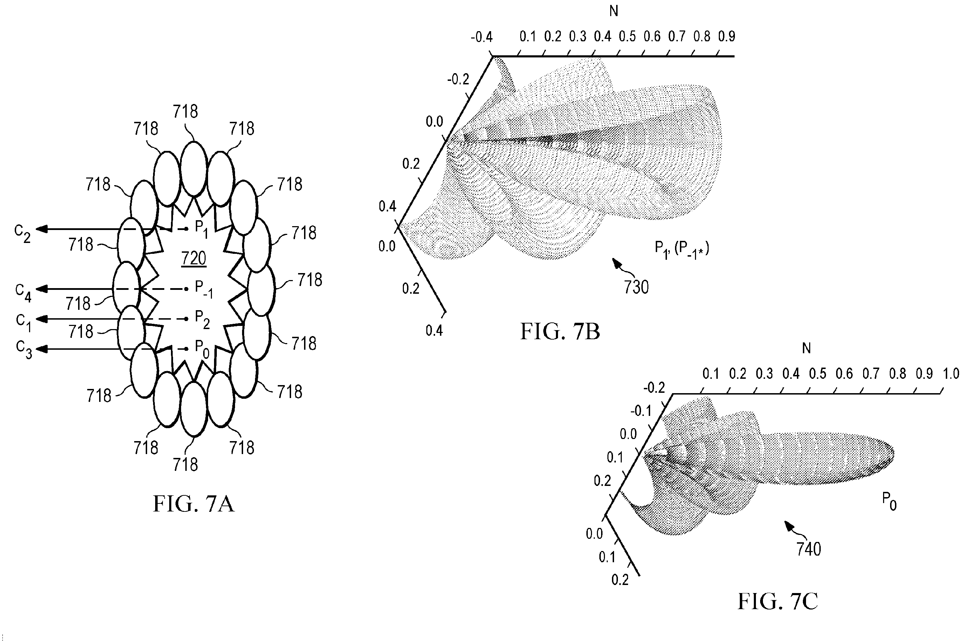

Fig. 7A is a conceptual illustration of an embodiment of the disclosed sparse phase-mode planar feed for circular arrays, wherein the substantially circular array of antenna elements to which it interfaces is represented by the patches 718. The sparse phase-mode feed proper is represented by the star-shaped planar entity 720 whose points symbolize the antenna-element electrical interfaces and the feed lines terminating at input-output (IO) ports $P_0$, $P_1$, $P_{-1}$ symbolize the beam-steering and/or receiving system electrical interfaces, where the phase-mode far-field patterns 100 (or 730), 200, 300 (like 740), respectively, are effected, and one I/O port ($P_2$) being usually terminated, so is not shown in Fig. 7A.

Fig. 7B is a graph 730 illustrating a half of the circularly-symmetrical far-field pattern of 1st order phase-mode $P_{-1*}$ and 1st order phase-mode $P_1$ of a 16-element, $\lambda/2$ spaced circular ring array. Fig. 7C is a graph 740 illustrating a half of the circularly-symmetrical far-field pattern of Oth order phase mode $P_0$ of a 16 element, $\lambda/2$ spaced circular ring array.

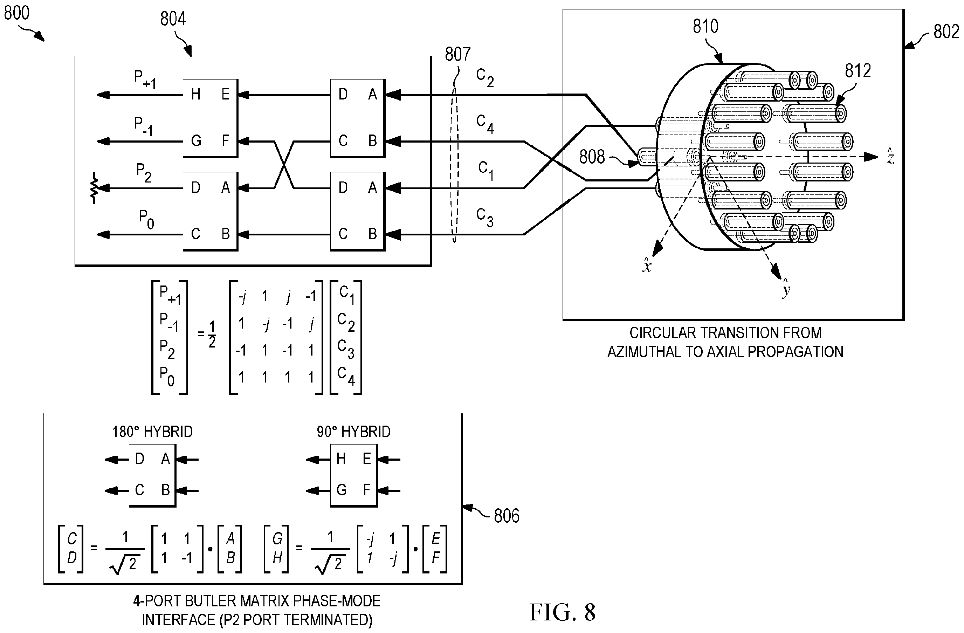

Fig. 8 illustrates a planar sparse phase-mode feed 800, with the antenna elements not shown for clarity of the drawing. The sparse phase-mode planar feed consists of the planar, circular 4:N transition assembly 802 having four central probes 808, a circular TEM region 810, N antenna-element probes 812 near the periphery of the circular TEM region 810, and a planar network of hybrids 806 connected as a 4 x 4 Butler matrix 804 whose antenna-side ports $C_1$, $C_2$, $C_3$, $C_4$ are sequentially connected to the four central probes 808 of the circular TEM region 810 via equal-length transmission-lines 807 and whose I/O ports $P_0$, $P_1$, $P_{-1}$, $P_2$ form the electrical interfaces to the beam-steering system, such as those described in pending U.S. Patent Application Serial Number 13/870,309 filed April 25, 2013 and entitled "Simple 2D Phase-Mode Enabled Beam-Steering Means" and in U.S. Patent Application Serial Number 14/295,235 filed June 3, 2014 and entitled "System and Method for Simple 2D Phase-Mode Enabled Beam-Steering." The signals at the I/O ports are related to the signals at the antenna-side ports of the 4x4 Butler matrix according to the relation illustrated in Figure 8(b), where $j = \sqrt{(-1)}$:

$$\begin{bmatrix} P_{+1} \\ P_{-1} \\ P_2 \\ P_0 \end{bmatrix} = \frac{1}{2} \begin{bmatrix} -j & 1 & j & -1 \\ 1 & -j & -1 & j \\ -1 & 1 & -1 & 1 \\ 1 & 1 & 1 & 1 \end{bmatrix} \begin{bmatrix} C_1 \\ C_2 \\ C_3 \\ C_4 \end{bmatrix} \qquad \dots(1)$$

The circular TEM region 810 serves to enable a transition from azimuthal propagation to axial propagation of the transverse electromagnetic (TEM) waves as they pass between the antenna elements and the Butler-matrix planar network. In other applications such as those involving acoustic waves, the same kind of transition between propagation modes is effected, but the probes 808, 812 in the transition assembly 802 may be of a different design and include transducers as appropriate for the acoustic or other medium.

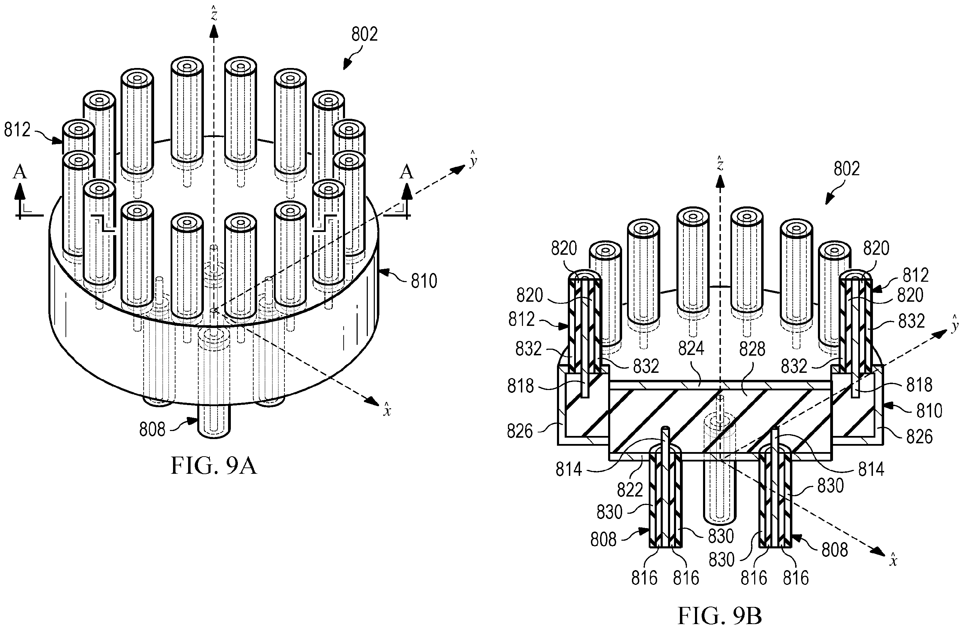

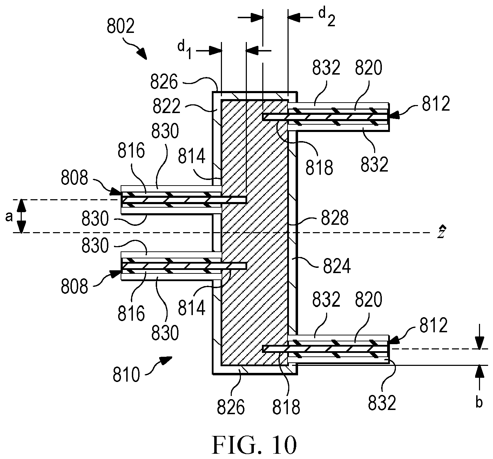

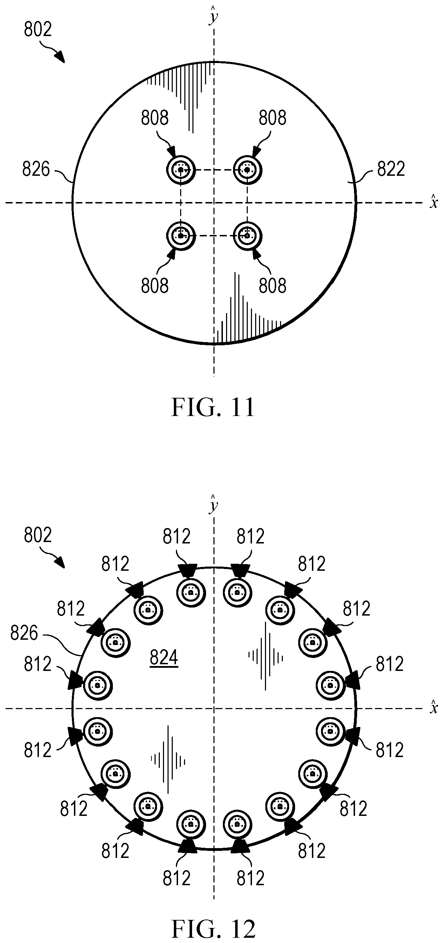

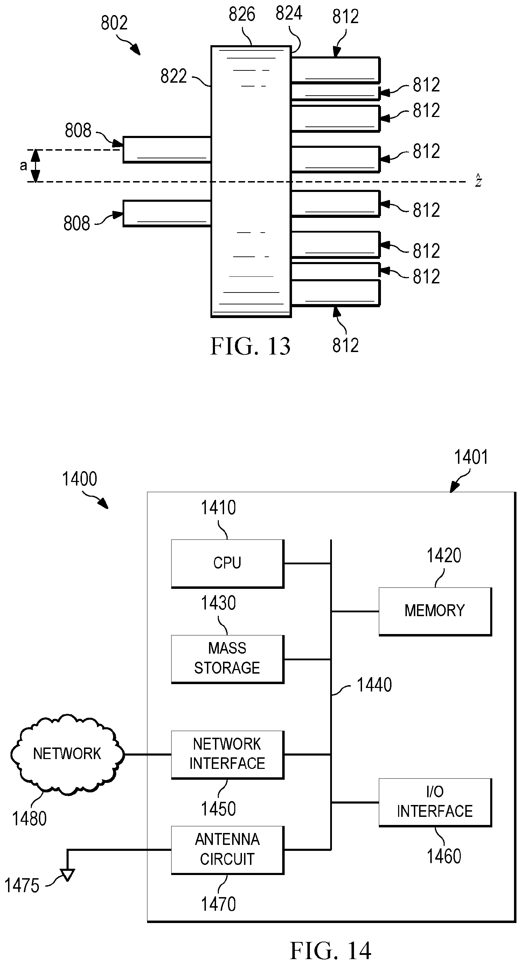

Figs. 9A-9B and 10-13 illustrate various views of the planar circular 4:N transition assembly 802 of sparse phase-mode planar feed 800. Fig. 9A is a perspective view of the transition assembly 802. Fig. 9B is a cut-away perspective view of the transition assembly 802. Fig. 10 is a cross-section view of the transition assembly 802. Fig. 11 is a bottom view of the transition assembly 802. Fig. 12 is a top view of the transition assembly 802. Fig. 13 is a side view of the transition assembly 802. As used herein, the terms "top" and "bottom" are used to distinguish two sides of the sparse phase-mode planar feed 800 and do not indicate a specific orientation of the sparse phase-mode planar feed 800 with respect to the earth's surface or any other surface.

The circular 4:N transition assembly 802 includes a first component 824 and a second component 822 connected by an edge component 826. The first component 824, second component 822, and the edge component 826 surround a cylindrical cavity 828. The first component 824, second component 822, and the edge component 826 are constructed from an electrically conducting material, such as copper or another metal. The edge component 826 is described herein as a wall, but the term wall, as used herein, does not necessarily imply a solid surface. In an embodiment, the wall is formed by a fence of spaced-apart conductive vias or other structures with dielectric therebetween. In an embodiment, the first component 824 and the second component 822 are oriented coaxially and parallel to each other. In an embodiment, the first component 824 and the second component 822 are each substantially circular flat disks. The thickness of each disk is small as compared to the distance between the first and second components 824, 822. The cylindrical cavity 828 may be a vacuum or filled with a gas (e.g., air). In an embodiment, the cylindrical cavity 828 is filled with a dielectric material. Additionally, those of ordinary skill in the art will recognize that the transition assembly 802 does not have to be a stand-alone structure, but may be embedded in some other structure. For example, the transition assembly 802 may be embedded in a larger, laminated planar structure with the edge component 826 implemented as a "fence" of plated-through via holes connected to the first component 824 and the second component 822, with probes built into the laminated structure for the central phased feed and the peripheral antennas. Furthermore, those of ordinary skill in the art will recognize that the first component 824 and the second component 822 do not have to be circular, but may include a portion of their surface that extends past the edge component 826. However, even in an embodiment in which the first component 824 and the second component 822 are not circular, a cylindrical cavity 828 containing a dielectric is defined by the first component 824, the second component 822, and the edge component 826.

N outer antenna-element (or transducer pick-up) probes 812 are coupled to the first component 824. In an embodiment, the outer transducer pick-up probes 812 are coaxial probes. The diameter of each of the first and second components 824, 822 is dependent on the number, N, of circular-array antenna elements such that the N pick-up probes 812 are about ½ wavelength apart and ¼ wavelength from the edge component 826 (i.e., the circumferential vertical conductive wall joining the top (first component 824) and bottom (second component 822) circular disks). Each outer transducer pick-up probe 812 includes an inner conductor 818 and an outer conductor 820. The N outer transducer pick-up probes 812 have their outer conductors 832 connected to the first component 824 and the inner conductors 818 protruding about 1/8 wavelength into the cylindrical cavity 828 between the first component 824 and the second component 822, but not touching the second component 822. The outer conductors 832 and the inner conductors 818 are separated by a dielectric layer 820.

Four feed probes 808 are coupled to the second component 822. In an embodiment, the feed probes 808 and pick-up probes 812 are coaxial probes. The four feed probes 808 are symmetrically spaced around the center of the second component 822. In an embodiment, the feed probes 808 are about $1/(2\pi)$ wavelength apart in a square or about ¼ wavelength along a circle whose diameter is the diagonal of the square. Each feed probe 808 includes an inner cylindrical conductor 814 and an outer coaxial cylindrical conductor 830 separated by a dielectric 816. It should be understood that feed probes of different shapes could alternatively be used. The outer conductor 830 is electrically coupled to the second component 822. The inner conductor 814 protrudes about 1/8 wavelength into the cylindrical cavity 828 between the second component 822 and the second component 824, but does not touch the first component 824. The wavelength, λ, is the wavelength of the radio-frequency (RF) signal received or transmitted by the antenna elements. The distance between the first and second component 824, 822 is at least about ¼ wavelength, but preferably not more than about ½ wavelength.

The inner conductors of the four feed probes 808 are connected to the antenna-side ports of a planar 4x4 Butler Matrix 804 via equal-length transmission lines 807 while matching their characteristic impedance to that of network 804 as required. The inner conductors of the N outer transducer pick-up probes 812 are connected to the transducer elements or antenna elements or sub-arrays via impedance-matching and balancing networks as required. In the depicted embodiment, N = 16. However, those of ordinary skill in the art will recognize that N may be any integer number. Furthermore, in other embodiments, other probe designs, such as magnetic loops, are utilized. In yet other embodiments, matching structures built on some of the surfaces surrounding any type of probes, including coupling slots, may be utilized for the probe design. Those of ordinary skill in the art will recognize that other probe designs other than those described herein may also be utilized.

The planar circular 4:N transition assembly 802 provides circular transition from azimuthal to axial propagation (and vice versa).

In an embodiment, λ=1.876 millimeters (mm). The dielectric used in the coaxial probes and between the disks has the following properties: $\varepsilon_r$=7.1, DuPont 9K7 LTCC material, f=60 Gigahertz (GHz). The disk separation = 0.53 mm (i.e., 0.2824 λ or approximately λ/4). The four inner feed probes' 808 spacing, "a" (from center of disk to center of probe 808) = 0.298 mm (approximately λ/2π), so spacing was $\sqrt{2} * 0.298 = 0.421$ mm (or approximately λ/4 along the arc length). The probe heights, "$d_1$" and "$d_2$", between the first component 824 and the second component 822 = 0.234 mm (i.e., approximately λ/8). The diameter of the inner layer 814, 818 of the probes 808, 812 is about 115 microns (μm) (∼ 0.0617 λ). The coaxial port outer diameter is about 200 μm (∼ λ/10). The 16 outer probes 812 are spaced apart approximately λ/2 at a radius of $R_e$=2.3886mm. $R_e$ is the radius of the circle on which lie the pick-up probes for the antenna elements. The outer wall connects the top and bottom metal disks at $R_d = R_e + λ/4 = 2.8576$ mm. $R_d$ is the radius of the cylindrical conducting wall connecting the top and bottom circular metal disks. It should be understood that the top and bottom metal disks could, in some embodiments, be just the circular regions of top and bottom conducting surfaces extending beyond $R_d$ (e.g., ground planes for other circuitry on the bottom and ground plane for the antenna structure). The 4x4 Butler Matrix includes one quadrature and three sum-difference hybrids in a microstrip using the bottom disk (i.e., second component 822) as a ground plane. Those of ordinary skill in the art will recognize that in other embodiments, different numbers of hybrids and/or other types of hybrids and phaseshifters, or other networks in general that perform a mathematically equivalent function (e.g., within a scaling factor of equation (1)) may be utilized in place of the disclosed one quadrature and three sum-difference hybrids disclosed herein. The element connections are arranged so as to maintain the same polarizations relative to the planar (x-y) axes and may include subarrays having a figure-eight azimuth pattern whose lobes are tangential to the circle of their array. The probes 808, 812 are terminated in 12.06 Ohms. The outer cylinder of coax probes 808, 812 are connected to the second component 822 and first component 824, respectively.

In an embodiment, grounded-via fences separate the four inner feed probes 808 in a microstrip or stripline layer.

Although described herein primarily with reference to a circular array, in other embodiments, the antenna array may be a square shape, polygonal shape, and/or a filled or partially-filled array.

The array of antennas 718 may include sub-arrays with radial or uniform polarization axes to effect phase-modes in case of circular polarization and re-order phase-mode ports. The sub-arrays are not shown, but would be easily implemented by a person having ordinary skill in the art. The sub-array may include several antenna elements. In an embodiment, the sub-array axes are arranged radially with respect to the center of the largest circular structures disclosed herein.

Embodiments of the disclosure avoid using a full NxN Butler Matrix or similar network as only 3 phase modes are utilized. Additionally, embodiments of the disclosure avoid the losses of NxN matrix feeds at mm-waves and maintain a planar, circularly-symmetric structure. Axes of element-patterns or axes of sub-array patterns may be independent of polarization axes. In an embodiment, a 4x4 Butler Matrix with four I/O ports and 4 antenna-side ports is utilized for transmitting and receiving signals to and from a planar TEM-wave transition region (e.g., space 828 in Fig. 10) between azimuthal and axial propagation of phase modes.

Fig. 14 is a block diagram of a processing system 1400 that may be used for implementing the devices and methods disclosed herein. Specific devices may utilize all of the components shown, or only a subset of the components and levels of integration may vary from device to device. Furthermore, a device may contain multiple instances of a component, such as multiple processing units, processors, memories, transmitters, receivers, etc. The processing system 1400 may comprise a processing unit 1401 equipped with one or more input/output devices, such as a speaker, microphone, mouse, touchscreen, keypad, keyboard, printer, display, and the like. The processing unit 1401 may include a central processing unit (CPU) 1410, memory 1420, a mass storage device 1430, a network interface 1450, an I/O interface 1460, and an antenna circuit 1470 connected to a bus 1440. The processing unit 1401 also includes an antenna element 1475 connected to the antenna circuit.

The bus 1440 may be one or more of any type of several bus architectures including a memory bus or memory controller, a peripheral bus, video bus, or the like. The CPU 1410 may comprise any type of electronic data processor. The memory 1420 may comprise any type of system memory such as static random access memory (SRAM), dynamic random access memory (DRAM), synchronous DRAM (SDRAM), read-only memory (ROM), a combination thereof, or the like. In an embodiment, the memory 1420 may include ROM for use at boot-up, and DRAM for program and data storage for use while executing programs.

The mass storage device 1430 may comprise any type of storage device configured to store data, programs, and other information and to make the data, programs, and other information accessible via the bus 1440. The mass storage device 1430 may comprise, for example, one or more of a solid state drive, hard disk drive, a magnetic disk drive, an optical disk drive, or the like.

The I/O interface 1460 may provide interfaces to couple external input and output devices to the processing unit 1401. The I/O interface 1460 may include a video adapter. Examples of input and output devices may include a display coupled to the video adapter and a mouse/keyboard/printer coupled to the I/O interface. Other devices may be coupled to the processing unit 1401 and additional or fewer interface cards may be utilized. For example, a serial interface such as Universal Serial Bus (USB) (not shown) may be used to provide an interface for a printer.

The antenna circuit 1470 and antenna element 1475 may allow the processing unit 1401 to communicate with remote units via a network. In an embodiment, the antenna circuit 1470 and antenna element 1475 provide access to a wireless wide area network (WAN) and/or to a cellular network, such as Long Term Evolution (LTE), Code Division Multiple Access (CDMA), Wideband CDMA (WCDMA), and Global System for Mobile Communications (GSM) networks. In some embodiments, the antenna circuit 1470 and antenna element 1475 may also provide Bluetooth and/or WiFi connection to other devices.

The processing unit 1401 may also include one or more network interfaces 1450, which may comprise wired links, such as an Ethernet cable or the like, and/or wireless links to access nodes or different networks. The network interface 1401 allows the processing unit 1401 to communicate with remote units via the networks 1480. For example, the network interface 1450 may provide wireless communication via one or more transmitters/transmit antennas and one or more receivers/receive antennas. In an embodiment, the processing unit 1401 is coupled to a local-area network or a wide-area network for data processing and communications with remote devices, such as other processing units, the Internet, remote storage facilities, or the like.

Although the description has been described in detail, it should be understood that various changes, substitutions and alterations can be made without departing from the scope of this disclosure as defined by the appended claims. Moreover, the scope of the disclosure is not intended to be limited to the particular embodiments described herein, as one of ordinary skill in the art will readily appreciate from this disclosure that processes, machines, manufacture, compositions of matter, means, methods, or steps, presently existing or later to be developed, may perform substantially the same function or achieve substantially the same result as the corresponding embodiments described herein. Accordingly, the appended claims are intended to include within their scope such processes, machines, manufacture, compositions of matter, means, methods, or steps.

## Claims

1. An apparatus for radiation beam-steering, comprising:

   a circular array of antenna elements, impedance-matching and balancing networks, and a sparse phase-mode feed (800) for the circular array of antenna elements that is configured to radiate at least one desired wavelength, wherein the feed and the antenna array are integrated in a planar structure, the antenna array comprises one or more coaxial rings of antenna elements, and the antenna array is configured to radiate in an axial direction orthogonal to the plane of the structure, wherein the feed comprises:

   an electrically conducting first surface (824);
   an electrically conducting second surface (822) parallel to and coaxial with the first surface, wherein the first and second surfaces are circular disks separated by not more than about ½ wavelength of dielectric, wherein the wavelength is the wavelength of the radio-frequency signal received or transmitted by the antenna elements;
   an electrically conducting outer wall (826) electrically coupling the first surface to the second surface, the first surface, the second surface, and the outer wall defining a cylindrical cavity (828), wherein the cylindrical cavity comprises a dielectric;
a plurality of antenna-element probes (812) symmetrically arranged proximate to an intersection of the outer wall and the first surface, each antenna-element probe (812) having a first antenna portion electrically coupled to the first surface and a second antenna portion that protrudes into the cylindrical cavity and is electrically isolated from the first antenna portion and from the first surface; and
a plurality of phase-mode feed probes (808) arranged symmetrically around and proximate to a center of the second surface, each phase-mode feed probe (808) having a first feed portion electrically connected to the second surface and a second feed portion that protrudes into the cylindrical cavity between the first and second surfaces and is electrically isolated from the first feed portion and from the second surface, the number of phase-mode feed probes (808) being less than the number of antenna-element probes (812),

wherein the antenna-element probes (812) comprise transducer pick-up probes that are about ½ wavelength apart, about ¼ wavelength from the electrically conducting outer wall, and their second antenna portion protrudes about 1/8 wavelength into the space between the first and second surfaces without touching the second surface, wherein the second portions of the transducer pick-up probes are configured to be connected to the respective antenna elements via the impedance-matching and balancing networks; and
there are four phase-mode feed probes (808), and their second feed portions protrude about 1/8 wavelength into the space between the first and second surfaces without touching the first surface,
so as to provide a circular transition region from azimuthal to axial Transverse Electromagnetic, TEM, propagation for the desired wavelength.

2. The apparatus of claim 1, wherein the apparatus further comprises a 4x4 Butler Matrix (804), wherein the phase-mode feed probes (808) are configured to be sequentially coupled to four antenna-side ports of the 4x4 Butler Matrix (804).

3. The apparatus of claim 1, wherein each of the antenna-element probes (812) is configured to be coupled to a respective one of a plurality of radiating elements in an array of antenna elements.

4. The apparatus of claim 1, wherein the phase-mode feed probes (808) and the antenna-element probes (812) comprise coaxial transmission lines or TEM waveguides.

5. The apparatus of claim 1, wherein the apparatus comprises a 4x4 Butler Matrix (804), wherein one of a plurality of input/output, I/O, ports of the 4x4 Butler Matrix (804) is configured to be terminated and at least one of the I/O ports is configured to be connected to beam-steering circuitry.

6. The apparatus of claim 5, wherein each of the Butler matrix (804) I/O ports corresponds to one of a plurality of sparse phase-mode feed I/O ports, wherein each of the sparse phase-mode feed I/O ports corresponds to a respective one of a 0th phase mode, a 1st phase mode, a -1st phase mode and 2nd phase mode.

7. A device for radiation beam-steering, comprising:

an apparatus according to any one of the claims 1 to 6;
a processor;
a transmitter/receiver configured to be coupled to the processor, wherein the transmitter/receiver is configured to transmit signals and receive signals according to instructions from the processor; and
the antenna array, configured to be coupled to the transmitter/receiver,
wherein the transmitter/receiver comprises beam-steering circuitry and the sparse phase-mode feed (800) is configured to couple the beam-steering circuitry to the antenna array.

**Patentansprüche**

1. Einrichtung für eine Strahlungsstrahllenkung, die Folgendes umfasst:

ein kreisförmiges Array von Antennenelementen, Impedanzabgleichs- und Ausgleichsnetzwerke und eine gestreute Phasenmoduszuleitung (800) für das kreisförmige Array von Antennenelementen, das dazu ausgelegt ist, mindestens eine gewünschte Wellenlänge abzustrahlen, wobei die Zuleitung und das Antennenarray in einer planaren Struktur integriert sind, das Antennenarray einen oder mehrere koaxiale Ringe von Antennenelementen umfasst und das Antennenarray dazu ausgelegt ist, in eine Axialrichtung orthogonal zur Ebene der Struktur abzustrahlen, wobei die Zuleitung Folgendes umfasst:

eine elektrisch leitende erste Fläche (824);

eine elektrisch leitende zweite Fläche (822) parallel zu und koaxial mit der ersten Fläche, wobei die erste und die zweite Fläche kreisförmige Scheiben sind, die um nicht mehr als ungefähr ½ Wellenlänge eines Dielektrikums getrennt sind, wobei die Wellenlänge die Wellenlänge des Hochfrequenzsignals ist, das von den Antennenelementen empfangen oder übertragen wird;

eine elektrisch leitende Außenwand (826), die die erste Fläche elektrisch an die zweite Fläche koppelt, wobei die erste Fläche, die zweite Fläche und die Außenwand einen zylindrischen Hohlraum (828) definieren, wobei der zylindrische Hohlraum ein Dielektrikum umfasst;

eine Vielzahl von Antennenelementsonden (812), die in der Nähe eines Schnittpunkts der Außenwand und der ersten Fläche symmetrisch angeordnet sind, wobei jede Antennenelementsonde (812) einen ersten Antennenabschnitt, der elektrisch an die erste Fläche gekoppelt ist, und einen zweiten Antennenabschnitt, der in den zylindrischen Hohlraum vorsteht und gegen den ersten Antennenabschnitt und gegen die erste Fläche elektrisch isoliert ist, aufweist; und

eine Vielzahl von Phasenmoduszuleitungssonden (808), die um eine Mitte der zweiten Fläche symmetrisch und in der Nähe derselben angeordnet sind, wobei jede Phasenmoduszuleitungssonde (808) einen ersten Zuleitungsabschnitt, der elektrisch mit der zweiten Fläche verbunden ist, und einen zweiten Zuleitungsabschnitt, der in den zylindrischen Hohlraum zwischen der ersten und der zweiten Fläche vorsteht und gegen den ersten Zuleitungsabschnitt und gegen die zweite Fläche elektrisch isoliert ist, aufweist, wobei die Anzahl von Phasenmoduszuleitungssonden (808) kleiner ist als die Anzahl von Antennenelementsonden (812),

wobei

die Antennenelementsonden (812) Wandleraufnahmesonden umfassen, die ungefähr ½ Wellenlänge auseinander sind, ungefähr ¼ Wellenlänge von der elektrisch leitenden Außenwand sind, und deren zweiter Antennenabschnitt ungefähr um 1/8 Wellenlänge in den Raum zwischen der ersten und der zweiten Fläche vorsteht, ohne die zweite Fläche zu berühren, wobei die zweiten Abschnitte der Wandleraufnahmesonden dazu ausgelegt sind, via die Impedanzabgleichs- und Ausgleichsnetzwerke mit den jeweiligen Antennenelementen verbunden zu sein; und

es vier Phasenmoduszuleitungssonden (808) gibt und deren zweite Zuleitungsabschnitte um ungefähr 1/8 Wellenlänge in den Raum zwischen der ersten und der zweiten Fläche vorstehen, ohne die erste Fläche zu berühren, um eine kreisförmige Übergangsregion von einer azimutalen zu einer axialen transversalelektromagnetischen Ausbreitung bzw. TEM-Ausbreitung für die gewünschte Wellenlänge bereitzustellen.

2. Einrichtung nach Anspruch 1, wobei die Einrichtung ferner eine 4x4-Butler-Matrix (804) umfasst, wobei die Phasenmoduszuleitungssonden (808) dazu ausgelegt sind, sequenziell an vier antennenseitige Anschlüsse der 4x4-Butler-Matrix (804) gekoppelt zu sein.

3. Einrichtung nach Anspruch 1, wobei jede der Antennenelementsonden (812) dazu ausgelegt ist, an ein jeweiliges einer Vielzahl von Strahlungselementen in einem Array von Antennenelementen gekoppelt zu sein.

4. Einrichtung nach Anspruch 1, wobei die Phasenmoduszuleitungssonden (808) und die Antennenelementsonden (812) Koaxialübertragungsleitungen oder TEM-Lichtwellenleiter umfassen.

5. Einrichtung nach Anspruch 1, wobei die Einrichtung eine 4x4-Butler-Matrix (804) umfasst, wobei einer einer Vielzahl von Eingangs-/Ausgangs(I/O)-Anschlüssen der 4x4-Butler-Matrix (804) dazu ausgelegt ist, abgeschlossen zu werden, und mindestens einer der I/O-Anschlüsse dazu ausgelegt ist, mit einer Strahllenkungsschaltung verbunden zu sein.

6. Einrichtung nach Anspruch 5, wobei jeder der I/O-Anschlüsse der Butler-Matrix (804) einem einer Vielzahl von gestreuten Phasenmoduszuleitungs-I/O-Anschlüssen entspricht, wobei jeder der gestreuten Phasenmoduszuleitungs-I/O-Anschlüsse einem jeweiligen eines 0. Phasenmodus, eines 1. Phasenmodus, eines -1. Phasenmodus und eines 2. Phasenmodus entspricht.

7. Vorrichtung für eine Strahlungsstrahllenkung, die Folgendes umfasst:

eine Einrichtung nach einem der Ansprüche 1 bis 6;

einen Prozessor;

einen Sender/Empfänger, der dazu ausgelegt ist, an den Prozessor gekoppelt zu sein, wobei der Sender/Empfänger dazu ausgelegt ist, gemäß Anweisungen vom Prozessor Signale zu übertragen und Signale zu empfangen; und

das Antennenarray, das dazu ausgelegt ist, an den Sender/Empfänger gekoppelt zu sein,

wobei der Sender/Empfänger eine Strahllenkungsschaltung umfasst und die gestreute Phasenmoduszuleitung (800) dazu ausgelegt ist, die Strahllenkungsschaltung an das Antennenarray zu koppeln.

## Revendications

1. Appareil destiné à orienter un faisceau de rayonnement, comprenant :

un réseau circulaire d'éléments d'antenne,

des réseaux d'adaptation et d'équilibrage d'impédance, et

une alimentation en mode de phase éparse (800) pour le réseau circulaire d'éléments d'antenne, qui est configurée pour rayonner au moins une longueur d'onde souhaitée, dans lequel l'alimentation et le réseau d'antennes sont intégrés dans une structure plane, le réseau d'antennes comprend un ou plusieurs anneaux coaxiaux d'éléments d'antenne, et le réseau d'antennes est configuré pour rayonner dans une direction axiale orthogonale au plan de la structure, l'alimentation comprenant :

une première surface électriquement conductrice (824) ;

une deuxième surface électriquement conductrice (822) parallèle et coaxiale à la première surface, les première et deuxième surfaces étant des disques circulaires séparés par pas plus qu'environ 1/2 longueur d'onde de diélectrique, la longueur d'onde étant la longueur d'onde du signal de radiofréquence reçu ou transmis par les éléments d'antenne ;

une paroi extérieure électriquement conductrice (826) couplant électriquement la première surface à la deuxième surface, la première surface, la deuxième surface et la paroi extérieure définissant une cavité cylindrique (828), la cavité cylindrique comprenant un diélectrique ;

une pluralité de sondes d'élément d'antenne (812) agencée symétriquement à proximité d'une intersection de la paroi extérieure et de la première surface, chaque sonde d'élément d'antenne (812) ayant une première partie d'antenne couplée électriquement à la première surface et une deuxième partie d'antenne qui fait saillie dans la cavité cylindrique et est électriquement isolée de la première partie d'antenne et de la première surface ; et

une pluralité de sondes d'alimentation en mode de phase (808) agencée symétriquement autour et à proximité d'un centre de la deuxième surface, chaque sonde d'alimentation en mode de phase (808) ayant une première partie d'alimentation électriquement connectée à la deuxième surface et une deuxième partie d'alimentation qui fait saillie dans la cavité cylindrique entre les première et deuxième surfaces et est électriquement isolée de la première partie d'alimentation et de la deuxième surface, le nombre de sondes d'alimentation en mode de phase (808) étant inférieur au nombre de sondes d'éléments d'antenne (812), dans lequel

les sondes d'élément d'antenne (812) comprennent des sondes de captation de transducteur qui sont espacées d'environ 1/2 longueur d'onde, d'environ 1/4 de longueur d'onde de la paroi extérieure électriquement conductrice, et leur deuxième partie d'antenne fait saillie d'environ 1/8 de longueur d'onde dans l'espace entre les première et deuxième surfaces sans toucher la deuxième surface, les deuxièmes parties des sondes de captation de transducteur étant configurées pour être connectées aux éléments d'antenne respectifs par l'intermédiaire des réseaux d'adaptation et d'équilibrage d'impédance ; et

il existe quatre sondes d'alimentation en mode de phase (808), et leurs deuxièmes parties d'alimentation font saillie d'environ 1/8 de longueur d'onde dans l'espace entre les première et deuxième surfaces sans toucher la première surface, de façon à fournir une région de transition circulaire entre une propagation en mode électromagnétique transversal, TEM, azimutale et axiale pour la longueur d'onde souhaitée.

2. Appareil selon la revendication 1, dans lequel l'appareil comprend en outre une matrice de Butler 4x4 (804), les sondes d'alimentation en mode de phase (808) étant configurées pour être couplées en séquence à quatre ports côté antenne de la matrice de Butler 4x4 (804).

3. Appareil selon la revendication 1, dans lequel chacune des sondes d'éléments d'antenne (812) est configurée pour être couplée à un élément respectif d'une pluralité d'éléments rayonnants dans un réseau d'éléments d'antenne.

4. Appareil selon la revendication 1, dans lequel les sondes d'alimentation en mode de phase (808) et les sondes d'élément d'antenne (812) comprennent des lignes de transmission coaxiale ou des guides d'ondes TEM.

5. Appareil selon la revendication 1, dans lequel l'appareil comprend une matrice de Butler 4x4 (804), l'un d'une pluralité de ports d'entrée/sortie, E/S, de la matrice de Butler 4x4 (804) étant configuré pour présenter une terminaison, et au moins l'un des ports d'E/S est configuré pour être connecté à des circuits d'orientation de faisceau.

6. Appareil selon la revendication 5, dans lequel chacun des ports d'E/S de la matrice de Butler (804) correspond à l'un d'une pluralité de ports d'E/S d'alimentation en mode de phase éparse, chacun des ports d'E/S d'alimentation en mode de phase éparse correspondant à un mode respectif parmi un mode de phase 0, un mode de phase 1, un mode de phase -1 et un mode de phase 2.

7. Dispositif destiné à orienter un faisceau de rayonnement, comprenant :

an appareil selon l'une quelconque des revendications 1 à 6 ;
un processeur ;
un émetteur/récepteur configuré pour être couplé au processeur, l'émetteur/récepteur étant configuré pour transmettre des signaux et pour recevoir des signaux selon des instructions provenant du processeur ; et
le réseau d'antennes, configuré pour être couplé à l'émetteur/récepteur,
dans lequel l'émetteur/récepteur comprend des circuits d'orientation de faisceau et l'alimentation en mode de phase éparse (800) est configurée pour coupler les circuits d'orientation de faisceau au réseau d'antennes.

FIG. 1

FIG. 2

$A = P_0, B = P_1 e^{j\theta},$

$M = C$

$M = P_0 \cos\phi - P_1 e^{j\theta} \sin\phi$

FIG. 3

FIG. 4

FIG. 5

FIG. 6

FIG. 7A

FIG. 7B

FIG. 7C

EP 3 278 398 B1

$$\begin{bmatrix} P_{+1} \\ P_{-1} \\ P_2 \\ P_0 \end{bmatrix} = \frac{1}{2} \begin{bmatrix} -j & 1 & j & -1 \\ 1 & -j & -1 & j \\ -1 & 1 & -1 & 1 \\ 1 & 1 & 1 & 1 \end{bmatrix} \begin{bmatrix} C_1 \\ C_2 \\ C_3 \\ C_4 \end{bmatrix}$$

CIRCULAR TRANSITION FROM
AZIMUTHAL TO AXIAL PROPAGATION

180° HYBRID          90° HYBRID

$$\begin{bmatrix} C \\ D \end{bmatrix} = \frac{1}{\sqrt{2}} \begin{bmatrix} 1 & 1 \\ 1 & -1 \end{bmatrix} \cdot \begin{bmatrix} A \\ B \end{bmatrix} \qquad \begin{bmatrix} G \\ H \end{bmatrix} = \frac{1}{\sqrt{2}} \begin{bmatrix} -j & 1 \\ 1 & -j \end{bmatrix} \cdot \begin{bmatrix} E \\ F \end{bmatrix}$$

4-PORT BUTLER MATRIX PHASE-MODE
INTERFACE (P2 PORT TERMINATED)

FIG. 8

EP 3 278 398 B1

FIG. 9A

FIG. 9B

EP 3 278 398 B1

FIG. 10

FIG. 11

FIG. 12

FIG. 13

FIG. 14

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 3827055 A
- US 2005259019 A1
- US 5028930 A
- EP 0313057 A2
- US 3090956 A
- US 4176322 A
- US 2014266901 A1
- US 13870309 B
- US 14295235 B

### Non-patent literature cited in the description

- **R. J. MAILLOUX.** Phased Array Antenna Handbook. 2005
- **F. MOHAMADI.** Wafer-scale integration brings low cost and a small footprint to active antenna arrays. RF Design, February 2005
- **L. RADE ; B. WESTERGREN.** Beta p Mathematics Handbook. CRC Press, 1992
- **RAHIM, T. ; DAVIES, D.E.N.** Effect of directional elements on the directional response of circular antenna arrays. *IEE Proceedings,* February 1982, vol. 129 (1
- **DAVIS, J. G. ; GIBSON, A. A.** Phase Mode Excitation in Beamforming Arrays. *Proceedings of the 3rd European Radar Conference,* September 2006, 307-310
- **KARAVASSILIS, N. ; DAVIES, D. E. N. ; GUY, C. G.** Experimental HF circular array with direction finding and null steering capabilities. *IEE Proceedings,* April 1986, vol. 133 (2
- **A. AKIYAMA ; J. HIROKAWA ; M. ANDO ; E. TAKCDA ; Y. ARAI.** Characteristics of 60GHz Band Conical Beam Radial Line Slot Antennas. *IEEE International Symposium on Antennas and Propagation,* 1999, 2122-2125
- **A. SIBILLC ; C. ROBLIN ; G. PONCELET.** Beam steering circular monopole arrays for wireless applications. *IEE Antennas and Propagation, International Conference on,* 14 April 1997, vol. 1, 358-361
- **M. B. SHCMIRANI ; F. ARYANFAR.** Analog implementation of high resolution DFT in RF domain, utilizing a special multilayer realization of Rotman lens. IEEE, 2008